# EUROPEAN PATENT APPLICATION

(11) **EP 4 848 384 A1**
(43) Date of publication of application: **02.12.2026**
(21) Application number: 26173569.0
(22) Date of filing: 21.04.2026
(51) Int. Cl.: H01M 8/04119, H01M 8/04007, H01M 8/04291, H01M 8/04492, H01M 8/04746, H01M 8/04828

(54) **FUEL CELL SYSTEM WITH CONDENSING WATER CONTROL**

(30) Priority: 14.05.2025 GB 202507435
(71) Applicant: AGCO Power Oy, 37240 Linnavuori (FI)
(72) Inventor: Wihersaari, Hugo, 37240 Linnavuori (FI); Koivisto, Miina, 37240 Linnavuori (FI)
(74) Representative: AGCO Intellectual Property Department

(57) **Abstract**

A fuel cell system (104) has a fuel cell (232), a heat exchanger (240), a water tank (108), a fluid sensor (264) and a control units (201). The heat exchanger (240) is configured to condense water from exhaust gas of the fuel cell system (104) for preparing condensed water (248). The water tank (108) is connected with the heat exchanger (240). The fluid sensor (264) is configured to provide a water quantity signal representing at least one parameter of a variable quantity of water. The control unit (201) is configured to receive the water quantity signal from the fluid sensor (264), determine a target water quantity, and control the heat exchanger (240) to adjust the preparation of condensed water (248) for reaching the target water quantity if the water quantity signal deviates from the target water quantity.

## Description

### FIELD

The present disclosure relates generally to a fuel cell system with a condensing water control.

### BACKGROUND

High-Temperature Polymer Electrolyte Membrane (HT-PEM) fuel cells are a promising technology for efficient and clean energy conversion. The normal operating temperature of HT-PEM fuel cells may be in the range of 120 to 200 degrees Celsius, for example more specifically in the range of 160 to 170 degrees Celsius. Operating at elevated temperatures, these fuel cells offer several advantages over their low-temperature counterparts. For example, HT-PEM fuel cells can tolerate higher levels of carbon monoxide, a common impurity in hydrogen fuel, reducing the need for extensive fuel purification. Operating at high temperatures reduces water condensation issues, simplifying the water management system. Further, the high operating temperature allows for better integration with combined heat and power systems, improving overall energy efficiency.

U. S. patent application US 2022/0407093 A1, "Fuel cell system with a multi-stream heat exchanger and its method of operation", published December 22, 2022, discloses a HT-PEM fuel cell that operates at temperatures above 120 degrees Celsius. The fuel cell system includes a fuel cell with an anode and a cathode, a reformer with a catalyst and a burner, and a heat exchanger. The fuel cell system is applicable to be operated in vehicles.

### BRIEF SUMMARY

Some type of fuel cells may use water as a first substance to react with another substance, for example with methanol in case of a methanol fuel cell. A fuel cell system operated with such a type of fuel cell may be configured to provide or generate at least a part of the amount of water required for the reaction, for example by means of a condensing unit. Thus, it would be beneficial to provide a fuel cell system with improved capabilities for generation of water.

According to an aspect of the invention there is provided a fuel cell system with a fuel cell, a heat exchanger configured to condense water from exhaust gas of the fuel cell system for preparing condensed water, a water tank connected with the heat exchanger, a fluid sensor for providing a water quantity signal representing at least one parameter of a variable quantity of water, and a control unit. The control unit is configured to receive the water quantity signal from the fluid sensor, determine a target water quantity and control the heat exchanger to adjust the preparation of condensed water for reaching the target water quantity if the water quantity signal deviates from the target water quantity.

The fuel cell system may be integrated in an agricultural machine to provide electric power for operating the same. For example, the electric power may be used to drive an electric motor to propel the agricultural machine. The agricultural machine may be an agricultural vehicle such as a tractor, a harvester, a combine, a sprayer, etc., optionally connected with an implement to provide a vehicle-implement combination. The fuel cell may be of any type such as a high-temperature polymer electrolyte membrane (HT-PEM) fuel cell.

Next to electric power, the fuel cell generates water vapor as part of exhaust gases during operation. The water vapor can be provided to the heat exchanger. The heat exchanger may comprise any component configured to condense water such as a condensing unit, a fan, a cooling element, a liquid-gas separator, etc. The heat exchanger may cool the temperature of the exhaust gas to condense water. The condensed water may be collected in the water tank. The heat exchanger may be a separate component or integrated in any component of the fuel cell system such as a cooling element for fuel cell stack cooling.

The fluid sensor may be connected with the control unit to send the water quantity signal to the control unit. The fluid sensor may be of the type of a fill level sensor, a weight sensor, a flowmeter or a combination thereof, for example. The fluid sensor may be integrated in the water tank, in the heat exchanger or in a hydraulic line of the fuel cell system for example. The water quantity signal may represent at least one parameter such as an amount of (condensed) water in the water tank, a fill level of (condensed) water in the water tank, a consumption rate of (condensed) water (e. g. obtained from the water tank), a filling rate of (condensed) water (e. g. filled into the water tank), a production rate of condensed water produced by the heat exchanger, or a combination thereof. The target water quantity may be exceeded or undercut by the water quantity signal. If the target water quantity is exceeded, the control unit may control the heat exchanger to produce less condensed water, e. g. by switching off the heat exchanger or increasing the cooling temperature of the heat exchanger. If the target water quantity is undercut, the control unit may control the heat exchanger to produce more condensed water, e. g. by switching on the heat exchanger or decreasing the cooling temperature of the heat exchanger. Hence, the generation of condensed water may be adjusted in accordance with a demand of the fuel cell system.

The target water quantity may comprise at least one of a target fill level of the water tank, a target amount of water in the water tank, a target filling rate, a target production rate of water and/or a target consumption rate of the water.

The control unit may determine the target water quantity based on a received demand from any component of the fuel cell system. For example, the target water quantity may correspond with a water consumption rate of a consumer such as a reformer of the fuel cell system. Hence, the heat exchanger may be controlled to produce as much condensed water as required by a specific consumer of the fuel cell system.

The target fill level of the water tank may correspond to a value between 70% and 90% of a maximum filling quantity of the water tank.

The lower threshold of 70% may ensure a minimum amount of water for a safe operation of the fuel cell system even for situations of increased demand of water (for a limited time period). The upper threshold of 90% may ensure a reserve for situations requiring an increased uptake of condensed water.

The control unit may be configured to adjust a cooling temperature of the heat exchanger if the water quantity signal deviates from the target water quantity.

The cooling temperature may be decreased by the control unit to produce more condensed water, for example if the fill level of the water tank undercuts a target fill level, or the filling rate or the production rate of condensed water is lower than the consumption rate of water. Vice versa, the cooling temperature may be increased by the control unit to produce less condensed water, for example if the fill level of the water tank exceeds the target fill level, or the filling rate or the production rate of condensed water is higher than the consumption rate of water. Hence, a closed-loop control of the heat exchanger in respect of the target water quantity may be provided.

The fuel cell may comprise a cathode connected with the heat exchanger for transferring cathode exhaust gas provided by the cathode as exhaust gas.

At the cathode, oxygen of a cathode gas reacts with protons and electrons to form water as cathode exhaust gas. Due to high operating temperatures of the fuel cell, the water may be emitted as water vapor. The cathode exhaust gas, i. e. the water vapor, may be transferred to the heat exchanger. Hence, the cathode can be used as a first source of the exhaust gas used for preparing condensed water by the heat exchanger.

The fuel cell system may comprise a reformer connected with the heat exchanger for transferring reformer exhaust gas provided by the reformer as exhaust gas.

The reformer may produce hydrogen (H₂) for an anode of the fuel cell serving as fuel for the electrochemical reactions to generate electric energy. In case of a methanol fuel cell system for example, the reformer may convert methanol (CH₃OH) and water (H₂O) into hydrogen-rich gas (H₂) which is then fed to the anode of the fuel cell. Next to, hydrogen, the reformer may produce carbon dioxide (CO₂) as reformer exhaust gas. The reformer exhaust gas may comprise water vapor if not all water has been used for the generation of hydrogen (H₂). Hence, the reformer can be used as another source of the exhaust gas used for preparing condensed water by the heat exchanger.

The control unit may be configured to determine a parameter of a variable quantity of water required by the reformer, and determine the target water quantity based on the parameter of the variable quantity of water required by the reformer.

The variable quantity of water required by the reformer may correspond to an amount of water or a water consumption rate of the reformer to produce a sufficient amount of hydrogen (H₂) for supplying the fuel cell. The amount of hydrogen required by the fuel cell may depend on a power request of the agricultural machine, for example to drive an electric motor. The target water quantity may correspond with the variable quantity of water required by the reformer. Hence, a closed-loop control of the heat exchanger in respect of the variable quantity of water required by the reformer may be provided. Consequently, the heat exchanger may be controlled to produce as much condensed water as required to supply the fuel cell sufficiently with hydrogen according to the power request.

The fuel cell system may comprise a water pump. The control unit may be configured to control the water pump for providing water in accordance with the parameter of the variable quantity of water required by the reformer.

Hence, the control unit may control both the heat exchanger for controlling the production of condensed water that may be transferred to the water tank, and the water pump for controlling the consumption of the water that may be taken out of the water tank. I. e., the control unit may control the filling rate and the consumption rate of the water in the water tank, for example to synchronize both. The control unit may control the heat exchanger to produce more condensed water if the variable quantity of water required by the reformer increases and vice versa. The water pump may be integrated in the water tank and connected with the reformer.

The control unit may be configured to control amounts of the cathode exhaust gas and reformer exhaust gas transferrable to the heat exchanger.

The properties of one of the cathode exhaust gas and the reformer exhaust gas may be better than the properties of the other one to prepare condensed water. For example, if the temperature of one of the exhaust gases is lower than the other one, the heat exchanger may require less power for condensing water from the exhaust gas having the lower temperature. Accordingly, the control unit may control the amounts of the exhaust gases in such a way that the amount of exhaust gas having the better properties for condensing water is greater than the amount of the other exhaust gas. For example, the exhaust gas having the lower temperature may be preferred. One valve may be arranged between the reformer and the heat exchanger, another one between the cathode and the heat exchanger. Both valves may be infinitely adjustable by the control unit so that each the exhaust gas flow of the reformer and the cathode to the heat exchanger can be controlled individually by the control unit to control the corresponding amounts of exhaust gas. The initial exhaust conditions of the cathode exhaust gas and the reformer exhaust gas as well as the required amount of water to be condensed may determine the final state of the exhaust gas exiting the heat exchanger. The cathode exhaust gas may have a lower temperature, a lower relative humidity, but a higher absolute water amount (since the mass flow may be higher) compared to the reformer exhaust gas. Therefore, at colder ambient temperature, the optimal way of condensing water may be to prioritize the cathode exhaust gas flow through the heat exchanger. In contrast, at higher ambient temperature, a larger portion of reformer exhaust gas may be directed to the heat exchanger.

The control unit may be configured to determine a power request to be provided by the fuel cell, determine a current power provided by the fuel cell, and adjust the target water quantity if the current power may be below the power request.

The power request to be provided by the fuel cell may correspond to a power demand of the agricultural machine to provide sufficient electric energy for the electric components of the agricultural machine. The current power provided by the fuel cell may be determined based on sensors such as current and/or voltage sensors being in communication with the control unit. If the control unit detects that the current power is below the power request, the control unit may increase the target water quantity for providing more condensed water that may be used to generate sufficient hydrogen gas for the fuel cell to comply with the power request. Analogously, the control unit may reduce the target water quantity if the current power increases the power request. Hence, the target water quantity can be adjusted in both ways so that the current power provided by the fuel cell matches with the power demand.

The fuel cell system may comprise an accumulator. The control unit may be configured to determine a state of charge of the accumulator, determine a target state of charge, and adjust the target water quantity if the state of charge of the accumulator is below the target state of charge.

The state of charge of the accumulator may be determined based on corresponding sensors being in communication with the control unit. If the state of charge of the accumulator is below the target state of charge, the fuel cell may be controlled to provide more electric energy for charging the accumulator. I. e., the electric power request to be fulfilled by the fuel cell may be increased. Hence, the control unit may increase the target water quantity for providing more condensed water that may be used to generate sufficient hydrogen gas for the fuel cell to comply with the increased electric power request.

The fuel cell system may comprise an exhaust gas sensor for determining a parameter of the exhaust gas. The parameter of the exhaust gas may comprise at least one of a temperature, a pressure, a relative humidity, a volume flow and/or a mass flow of the exhaust gas.

The parameter of the exhaust gas may be received and processed by the control unit to determine the target fill level, to control the heat exchanger and/or to control the valves. The exhaust gas sensor may measure two or more of the parameters and send to the control unit. The pressure may be processed by the control unit to improve the accuracy of the temperature or any other parameter. The relative humidity in combination with the volume flow and/or the mass flow of the exhaust gas may be processed by the control unit to validate the temperature or to substitute the temperature (e. g. in case of an invalid temperature value).

The exhaust gas sensor may be a cathode exhaust gas sensor for determining a parameter of the cathode exhaust gas or a reformer exhaust gas sensor for determining a parameter of the reformer exhaust gas.

The reformer exhaust gas sensor may be integrated between the reformer and the heat exchanger. The cathode exhaust gas sensor may be integrated between the cathode and the heat exchanger. The fuel cell system may comprise both the reformer exhaust gas sensor and the cathode exhaust gas sensor to control the valves individually.

The control unit may be configured to determine a cooling temperature of the heat exchanger, determine a production rate of condensed water providable by the heat exchanger based on the parameter of the exhaust gas and the cooling temperature.

The heat exchanger may be equipped with a temperature sensor to measure the cooling temperature. The control unit may receive the cooling temperature. Then, the control unit may estimate how much condensed water could be produced within a specific time period when a specific amount of exhaust gas, e. g. measured by the exhaust gas sensor, is cooled by the heat exchanger. Accordingly, the control unit may determine the production rate of condensed water, e. g. in terms of liters of condensed water per minute.

The control unit may be configured to adjust the production rate of condensed water by adjusting the cooling temperature.

The production rate of condensed water may depend on the pressure of the exhaust gas and the temperature difference of the exhaust gas after cooling. The temperature difference of the exhaust gas may depend on the cooling temperature of the heat exchanger. Hence, the temperature difference may be controlled by the control unit by adjusting the cooling temperature of the heat exchanger. The control unit may control the heat exchanger to lower the cooling temperature to produce more condensed water, and vice versa.

The control unit may be configured to adjust the production rate of the condensed water in accordance with the target water quantity.

Hence, the production rate may be adjusted by the control unit to produce condensed water in accordance with the target fill level, target filling rate or target consumption rate of water.

Another aspect includes a method of controlling a fuel cell. The method comprises receiving a water quantity signal representing at least one parameter of a variable quantity of water from a fluid sensor, determining a target water quantity, and controlling a heat exchanger to adjust a preparation of condensed water for reaching the target water quantity if the water quantity signal deviates from the target water quantity.

As disclosed above, the control unit is configured to execute different actions. Each action may be implemented as one or more method steps of the method executable by the control unit. Hence, each action for which the control unit is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine with a fuel cell system.
FIG. 2 illustrates exemplarily the fuel cell system.
FIG. 3 illustrates a pressure-enthalpy diagram for water.
FIG. 4 illustrates a simplified view of a control unit.
FIG. 5 illustrates a flow chart of a method executable by the control unit of FIG. 4.

### DETAILED DESCRIPTION

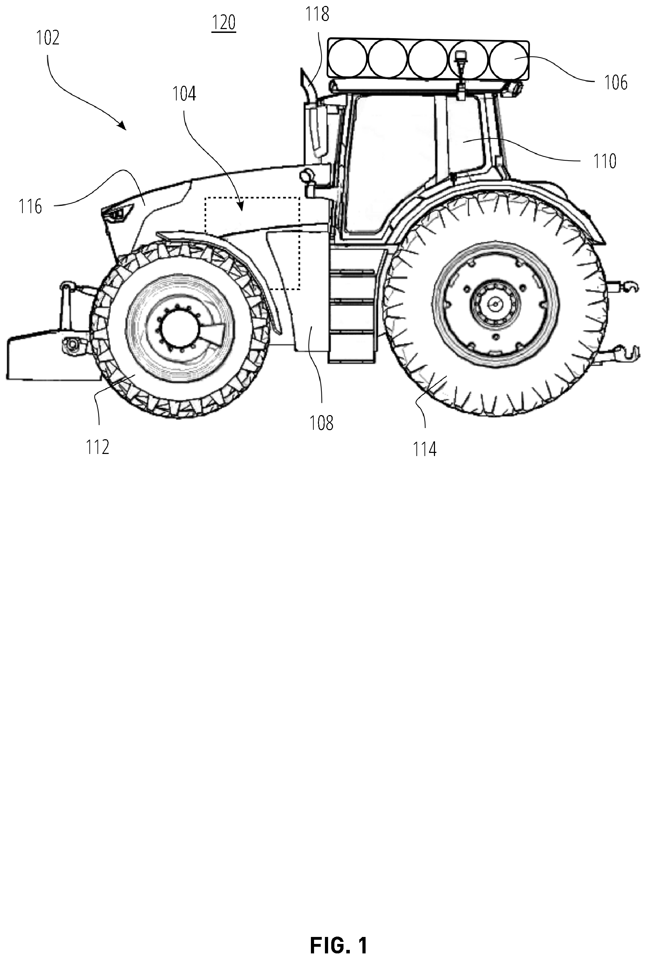

FIG. 1 shows an electrically powered agricultural machine 102 comprising front wheels 112 and rear wheels 114. The wheels 112, 114 are driven by an electric motor installed in a driveline of the agricultural machine 102. The agricultural machine 102 may be a vehicle or a vehicle-implement combination. The implement may be fixed to the vehicle or detachably connected with the vehicle. The vehicle may be an agricultural vehicle such as a tractor, a harvester, a combine, a sprayer or of any other type such as a truck. The implement may be used for an operation in an agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, etc.

The agricultural machine 102 comprises a cabin 110 for an operator to sit in the agricultural machine 102 and to manually control the agricultural machine 102. On top of the cabin 110, there are attached five tanks composed to a combined fuel tank 106. The fuel tank 106 may store a fuel such as hydrogen, methanol, natural gas, ethanol or a mixture thereof. The agricultural machine 102 comprises also a water tank 108 and an exhaust pipe 118. A fuel cell system 104 is integrated in the agricultural machine 102, for example under a hood 116 of the agricultural machine 102, and connected with the fuel tank 106, the water tank 108 and the exhaust pipe 118. The fuel stored in the fuel tank 106 and the water stored in the water tank 108 can be delivered to the fuel cell system 104. The fuel and the water can be processed by the fuel cell system 104 to generate electric energy, e. g. for the electric motor to provide a tractive force for propelling the wheels 112, 114. Exhaust gas produced by the fuel cell system 104 during operation can be vented out of the exhaust pipe 118 to environment 120.

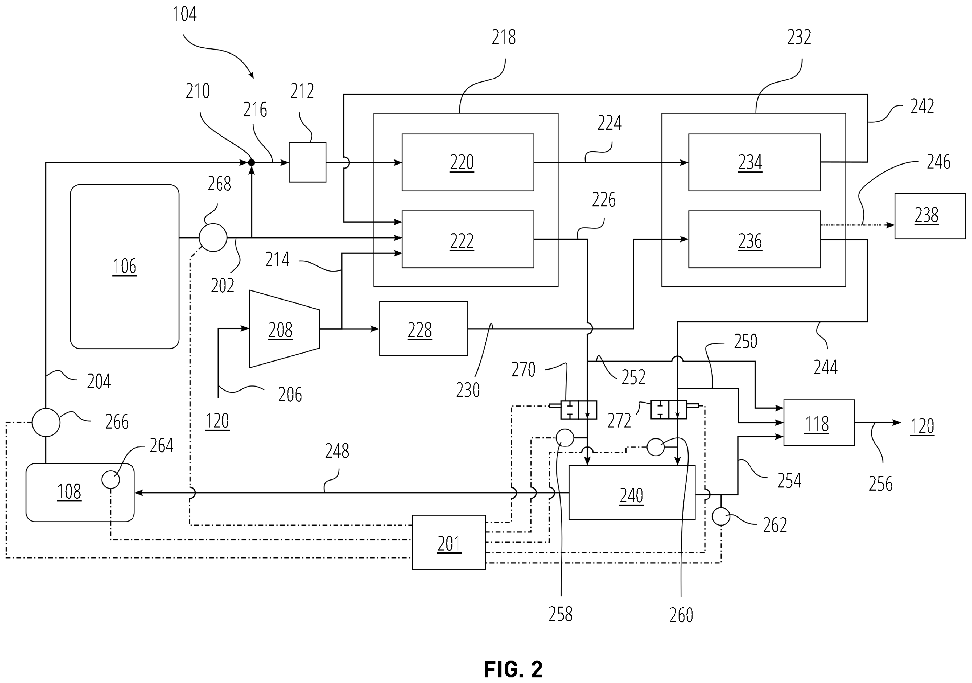

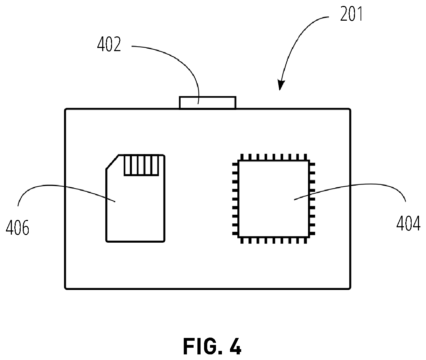

The agricultural machine 102 comprises also a control unit. The control unit 201 as shown in FIG. 2 and in FIG. 4 in more detail may be installed anywhere in the agricultural machine 102, for example under the hood 116.

FIG. 2 shows exemplarily a block diagram of the fuel cell system 104 comprising a fuel cell 232 and being connected with the fuel tank 106 storing fuel 202, the water tank 108 storing water 204, the exhaust pipe 118 and the control unit 201. Depending on the type of the fuel cell system 104, hydrogen gas 224 to power the fuel cell 232 may be obtained from different fuel types, for example directly from hydrogen or indirectly from a hydrogen carrier such as methanol, natural gas, ethanol or a mixture thereof. In case of a hydrogen carrier, the fuel cell system 104 comprises a reformer 218 to reform the hydrogen carrier to hydrogen gas 224. For reason of easier understanding, the fuel cell system 104 is considered to be designed as a high-temperature methanol fuel cell system (HT-MFCs) configured to operate at elevated temperatures, typically between 120°C and 200°C, that uses methanol as fuel 202, for example.

In addition to the fuel cell 232, the reformer 218, the fuel tank 106, the water tank 108, the exhaust pipe 118 and the control unit 201, the fuel cell system 104 comprises a heat exchanger 240, an accumulator 238, an evaporator 212, a compressor 208, a gas heating system 228, a fuel pump 268, a water pump 266, a fluid sensor 264, a reformer exhaust gas sensor 258, a cathode exhaust gas sensor 260, a heat exchanger exhaust gas sensor 262, a first valve 270 and a second valve 272. The fluid sensor 264, the reformer exhaust gas sensor, the cathode exhaust gas sensor 260 and the heat exchanger exhaust gas sensor 262 may be each a fluid sensor configured to measure a temperature, a pressure, a mass / volume flow or a combination thereof, for example.

The water pump 266 is controlled by the control unit 201 to pump water 204 from the water tank 108 to the evaporator 212. Analogously, the fuel pump 268 is controlled by the control unit 201 to pump fuel 202, here exemplarily methanol, from the fuel tank 106 to the evaporator 212. At a mixing point 210, the fuel 202 and the water 204 is mixed to provide a fuel-water mixture 216. The fuel-water mixture 216 is than evaporated by the evaporator 212 and transferred to the reformer 218 which is connected with the evaporator 212.

The reformer 218 catalytically converts methanol (CH₃OH) and water (H₂O) of the fuel-water mixture 216 into hydrogen (H₂) as hydrogen gas 224 and carbon dioxide (CO₂) as a part of the reformer exhaust gas 226 through a process called steam reforming:

CH₃OH + H₂O → 3H₂ + CO₂.

Although steam reforming is one of the most popular methods for reforming hydrogen, a different process such as an autothermal or partial oxidation method may be performed by the reformer 218.

For the catalytic reaction in the reformer 218, the vaporized fuel-water mixture 216 is fed into a reformer catalyst 220 of the reformer 218. To heat the reformer 218 to appropriate temperatures for the catalytic reaction, for example in the range of 250°C to 300°C, a reformer burner 222 of the reformer 218 burns reformer gas 214, anode exhaust gas 242 and/or fuel 202 in a combustion chamber. The reformer burner 222 is connected with the compressor 208 for delivering compressed air 206 (O₂) from the environment 120 as reformer gas 214 to the reformer burner 222. Additionally, the reformer burner 222 is connected with an anode 234 of the fuel cell 232 for receiving hydrogen (H₂) as anode exhaust gas 242 and with the fuel pump 268 for receiving fuel 202 (methanol) from the fuel tank 106. During the burning process in the reformer burner 222, reformer exhaust gas 226 comprising carbon dioxide (CO₂), water vapor (H₂O), unreacted methanol (CH₃OH) and some carbon monoxide (CO) is produced reaching a temperature in the range of 350°C to 400°C. The heat is transferred to the reformer catalyst 220 for the catalytic reaction. The reformer exhaust gas 226 is separated by the reformer 218 and partly provided to the heat exchanger 240 and the exhaust pipe 118. The reformer 218 may optionally contribute to reduce carbon monoxide (CO) level of the reformer exhaust gas 226 to avoid damage of the fuel cell catalysts, for example by means of an optional water-gas shift reaction and preferential oxidation. Increasing the steam to carbon (or water to methanol) ratio may tend to decrease the carbon monoxide concentration.

The anode 234 of the fuel cell 232 is also connected with the reformer catalyst 220 to receive the hydrogen gas 224 (H₂) produced by the reformer catalyst 220. This hydrogen gas 224 serves as fuel for the electrochemical reactions in the fuel cell 232 to generate electric energy 246. Next to the anode 234, the fuel cell 232 comprises a cathode 236 and a proton exchange membrane arranged between the anode 234 and the cathode 236. The electrodes are usually made of platinum-based catalysts to facilitate the electrochemical reactions. The proton exchange membrane may be a high-temperature polymer electrolyte membrane, for example a polybenzimidazole (PBI) membrane doped with phosphoric acid, which provide thermal stability and high proton conductivity at elevated temperatures. The cathode 236 is connected with the compressor 208 to be supplied with oxygen (O₂) as cathode gas 230 in terms of compressed air 206 from the environment 120. Alternatively, another oxygen-containing gas or even pure oxygen gas could be used as cathode 236. Optionally, the cathode gas 230 may heated by the gas heating system 228 before entering the cathode 236 of the fuel cell 232 to increase the temperature of the oxygen (O₂).

The hydrogen gas 224 (H₂) received from the reformer catalyst 220 reacts at the anode 234 to produce protons and electrons according to the following anode reaction:

3H₃ → 6H⁺ + 6e⁻.

The protons (hydrogen ions) pass through the proton exchange membrane from the anode 234 to the cathode 236, while the electrons travel through an external circuit, generating electric energy 246. At the cathode 236, the oxygen (O₂) reacts with the protons and electrons to form water according to the following cathode reaction:

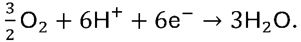

Finally, the overall reaction for the high-temperature methanol fuel cell system 104 highlights the process of converting the chemical energy of methanol (CH₃OH) into electrical energy, with carbon dioxide and water vapor as byproducts:

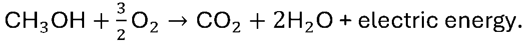

The electric energy 246 produced by the cathode 236 is stored in the accumulator 238 of the fuel cell system 104 for supplying the electric components of the agricultural machine 102.

As can be seen in FIG. 2, the heat exchanger 240 is connected with the reformer burner 222 and the cathode 236 of the fuel cell 232 for transferring the reformer exhaust gas 226 and the cathode exhaust gas 244 to the heat exchanger 240. A first valve 270 controllable by the control unit 201 is arranged between the reformer burner 222 and the heat exchanger 240. Analogously, a second valve 272 controllable by the control unit 201 is arranged between the cathode 236 and the heat exchanger 240. The first and the second valves 270, 272 are each infinitely adjustable between a fully open and a fully closed position to individually control the amount of reformer exhaust gas 226 and the amount of cathode exhaust gas 244 delivered to the heat exchanger 240. As mentioned above, both the reformer exhaust gas 226 and the cathode exhaust gas 244 may contain water vapor (H₂O). Hence, the control unit 201 may control the amount of water vapor delivered to the heat exchanger 240 by controlling the valves 270 and 272 accordingly.

If not all reformer exhaust gas 226 or cathode exhaust gas 244 can be transferred to the heat exchanger 240, then the exhaust gases are discharged to the exhaust pipe 118 by means of a bypass 250 arranged between the reformer burner 222 and the exhaust pipe 118, and a bypass 252 arranged between the cathode 236 and the exhaust pipe 118. From the exhaust pipe 118, the exhaust gas 256 is vented to the environment 120.

The reformer exhaust gas sensor 258 is arranged between the first valve 270 and the heat exchanger 240 to measure a parameter of the reformer exhaust gas 226 transferred to the heat exchanger 240. Analogously, the cathode exhaust gas sensor 260 is arranged between the second valve 272 and the heat exchanger 240 to measure a parameter of the cathode exhaust gas 244 transferred to the heat exchanger 240. The parameter of the reformer exhaust gas 226 and/or the cathode exhaust gas 244 comprises at least one of a concentration of water vapor, a temperature, a pressure, a relative humidity, a volume flow and/or a mass flow of the exhaust gas. Corresponding sensor signals are sent from the reformer exhaust gas sensor 258 and the cathode exhaust gas sensor 260 to the control unit 201.

The heat exchanger 240 may be a fan, a condensing unit, a liquid-gas separator or any other component configured to condense water. Depending on the amount of exhaust gases produced by the reformer 218 and the cathode 236 as well as the flow quantity regulated by the first and second valves 270 and 272, a specific amount of water vapor contained in the reformer exhaust gas 226 and the cathode exhaust gas 244 is delivered to the heat exchanger 240. Then, the transferred exhaust gases 226 and 244 are cooled in the heat exchanger 240 to produce condensed water 248.

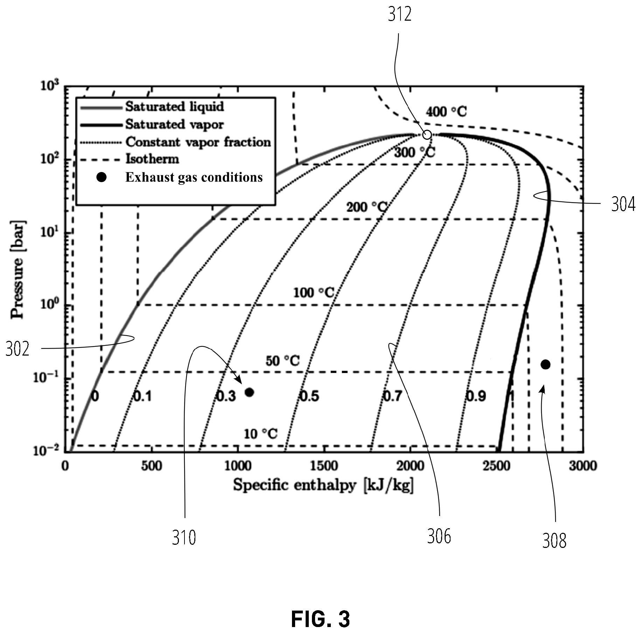

The amount of condensed water 248 produced by the heat exchanger 240 depends on the pressure of the exhaust gases 226, 244 and the cooling temperature of the heat exchanger 240 which is controlled by the control unit 201. Depending on the cooling temperature of the heat exchanger 240, the temperature of the transferred exhaust gases 226 and 244 are reduced resulting in a change of the specific enthalpy of the transferred exhaust gases 226 and 244. This context is exemplarily illustrated in FIG. 3 showing a pressure-enthalpy diagram (p-h diagram) for water.

As can be seen in FIG. 3, the pressure-enthalpy diagram for water visualizes the relationship between pressure and enthalpy during various thermodynamic processes changing the aggregate state of water (e. g. by condensation or evaporation) or changing the pressure of water. The pressure (p) of water is plotted on the vertical axis. The specific enthalpy is plotted on the horizontal axis and represents the total heat content of the water. Based on saturation lines 302 and 304, the different aggregate states of water can be distinguished. Saturation line 302 represents the saturated liquid line marking the boundary between the liquid state and a two-phase region. Saturation line 304 represents the saturated vapor line marking the boundary between the two-phase region and the vapor state. The two-phase region lies between the saturated liquid line (302) and the saturated vapor line (304). There, water exists as a mixture of liquid and vapor. Saturation lines within this region indicate the proportion of vapor in the mixture such as saturation line 306 exemplarily representing a constant vapor fraction of 70%. At a temperature of 374°C and a pressure of 220.6 bar, the saturated liquid line (302) meets the saturated vapor line (304) at a critical point 312. Beyond this point, water exists as a supercritical fluid, where distinct liquid and vapor states do not exist. The pressure-enthalpy diagram also shows isotherms which are lines of constant temperature showing how enthalpy changes with pressure at a constant temperature.

When the exhaust gases 226 and 244 of the reformer burner 222 and the cathode 236 enter the heat exchanger 240, the reformer exhaust gas sensor 258 and the cathode exhaust gas sensor 260 may be used to determine initial exhaust conditions 308 as exemplarily shown in FIG. 3. For example, the reformer exhaust gas sensor 258 and the cathode exhaust gas sensor 260 may measure a temperature between 120°C and 400°C at a relative exhaust gas pressure of about 0.2 bar. Hence, the water contained in the exhaust gases 226 and 244 is in vapor state. Due to the cooling process of the heat exchanger 240, the exhaust gases 226 and 244 are cooled down below 50°C (see FIG. 3: Final exhaust gas conditions 310 ). For example, if the exhaust gas entering the heat exchanger 240 contains 150 g of water vapor per dry kilogram of air and 60% of the water would need to be recovered, the required final exhaust gas temperature exiting the heat exchanger would correspond to a temperature where the saturation vapor content equals to 60 g of water per dry kilogram of air. Depending on the desired accuracy, exhaust gas properties may be estimated to represent those of air. The control unit 201 may reduce the cooling temperature of the heat exchanger 240 to reduce the vapor fraction for increasing the amount of condensed water 248, or increase the cooling temperature of the heat exchanger 240 to increase the vapor fraction for reducing the amount of condensed water 248.

The condensed water 248 produced by the heat exchanger 240 is delivered to the water tank 108 which is connected with the heat exchanger 240. Remaining exhaust gas 254 of the heat exchanger 240 is discharged to the exhaust pipe 118 while the heat exchanger exhaust gas sensor 262 arranged between the heat exchanger 240 and the exhaust pipe 118 measures a parameter of the exhaust gas 254 and sends a corresponding signal to the control unit 201. The condensed water 248 is transferred from the heat exchanger 240 to the water tank 108. The fluid sensor 264 measures at least one parameter of a variable quantity of water and provides a corresponding water quantity signal. The at least one parameter may be an amount of water in the water tank 108, a fill level of water in the water tank 108, a consumption rate of water (e. g. obtained from the water tank 108) and/or filling rate of the tank (e. g. filled into the water tank 108), a production rate of condensed water 248 produced by the heat exchanger 240, a mass / volume flow of condensed water 248, a pressure of the condensed water 248, a temperature of the condensed water 248, or a combination thereof, for example. The fluid sensor 264 can be integrated in the water tank 108, in a line connecting the heat exchanger 240 with the water tank 108 or in a line connecting the water tank 108 with the water pump 266 or the mixing point 210. The fluid sensor 264 is connected with the control unit 201 and sends the at least one parameter of a variable quantity of water in terms of a water quantity signal to the control unit 201.

FIG. 4 shows the control unit 201 comprising an I/O interface 402, a controller 404 and a memory 406. The I/O interface 402, the controller 404 and the memory 406 may be attached to a printed circuit board (PCB). The control unit 201 may receive and send signals or data via the I/O interface 402. The I/O interface 402 may be a wireless interface or a connector. The controller 404 may optionally represent a combination of two or more networked controllers. The controller 404 may store the data or signals received by the control unit 201 in the memory 406. The memory 406 may contain additional data or executable computer program products, for example in terms of a computer-implemented method, that may be retrieved, processed or executed by the controller 404. Data or signals resulting from the processing of data or signals or from the execution of a computer program product may be stored to the memory 406 or sent to the I/O interface 402 by the controller 404. Regardless of FIG. 4 exemplarily illustrating the control unit 201 as a standalone control unit, the control unit 201 may represent a network of multiple control units distributed within the system.

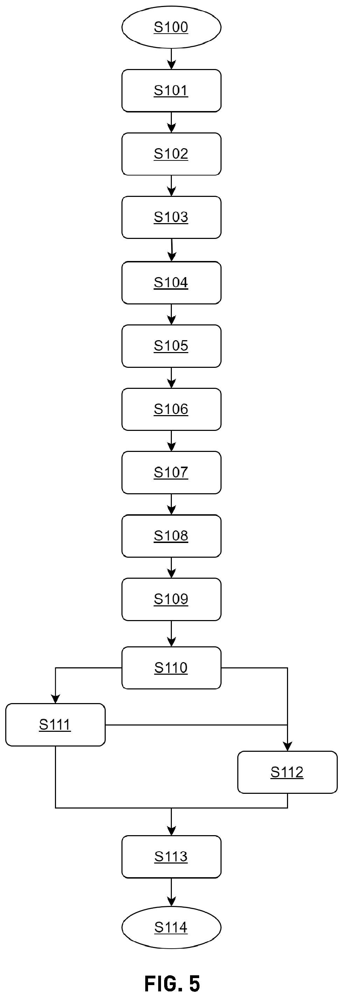

FIG. 5 shows a flow chart of a method for controlling the fuel cell system 104. The method may be at least partly a computer-implemented method stored as a computer program product in the memory 406 of the control unit 201. The control unit 201 is configured to carry out the method. Computer-implemented parts of the method may be executed by the controller 404 of the control unit 201. Non-computer-implemented parts of the method may be executed manually or by other components of the system. The method is described by way of example of several steps without any restriction in respect of the steps. That is, the number or the order of steps may be adapted, for example single steps may be excluded and/or added and executed earlier or later than described. When the method proceeds from one step to a next step, the previous step may still be active so that both the one and the next step may be executed in parallel. Accordingly, the control unit may execute two or more method steps in parallel.

The method starts at step S100 and proceeds to step S101. At step S101, the control unit 201 receives the water quantity signal from the fluid sensor 264.

The method proceeds to step S102 and the control unit 201 determines a parameter of a variable quantity of water 204 required by the reformer 218. The parameter of a variable quantity of water 204 required by the reformer 218 may be determined based on the water quantity signal received from the fluid sensor 264, for example in terms of a consumption rate of water 204 consumed by the reformer 218 or a pump rate of the water pump 266 for supplying the reformer 218 with water 204.

The method proceeds to step S103 and the control unit 201 determines a current power provided by the fuel cell 232. The power provided by the fuel cell 232 may be measured by corresponding sensors of the fuel cell system 104, such as current and/or voltage sensors, and depends on the amount of hydrogen gas 224 delivered by the reformer catalyst 220. The power may be used to supply any electric component of the agricultural machine 102 and/or to charge the accumulator 238.

The method proceeds to step S104 and the control unit 201 determines a state of charge of the accumulator 238. The state of charge corresponds to an electric energy level stored in the accumulator 238 and may be measured by a corresponding sensor of the fuel cell system 104.

The method proceeds to step S105 and the control unit 201 determines a target water quantity. The target water quantity comprises at least one of a target fill level of the water tank 108, a target amount of water 204 in the water tank 108, a target filling rate and/or a target consumption rate of water. The control unit 201 may determine the target water quantity based on a parameter of the variable quantity of water 204 required by the reformer 218. For example, the target filling rate of water 204 may be adjusted to the consumption rate of water 204 required by the reformer 218 for fulfilling a specific production rate of hydrogen gas 224. The specific production rate of hydrogen gas 224 may depend on a demand for providing a specific amount of electric power by the fuel cell 232, for example to supply an electric consumer such as an electric motor of the agricultural machine 102. The demanded electric power may be measured by a corresponding sensor of the fuel cell system 104. Based thereon, the control unit 201 can determine the required production rate of hydrogen gas 224 and correspondingly the required quantity of water 204 as target water quantity, for example by way of calculation. For example, the target fill level of the water tank 108 may correspond to a range having a lower threshold and a higher threshold. The lower threshold may ensure a minimum amount of water 204 in the water tank 108 for a safe operation of the fuel cell system 104 even for situations of an increased demand of water 204, for example for operating the fuel cell 232 at maximum power for a limited time period. The upper threshold may ensure a reserve for situations requiring an increased uptake of condensed water 248 to avoid an overflow of the water tank 108. The lower threshold may be 70% of a maximum filling quantity of the water tank 108 and the upper threshold may be 90% of a maximum filling quantity of the water tank 108, for example.

The method proceeds to step S106 and the control unit 201 determines a power request to be provided by the fuel cell 232. The power request may depend on a demand from the driver of the agricultural machine 102. For example, the driver may actuate an acceleration pedal to increase a driving speed of the agricultural machine 102. The demanded acceleration results in an increased power request to be provided by the fuel cell 232 to provide the additional electric power for accelerating the electric motor. Similarly, an activation of any electric consumer such as an electric seat heater may also result in an increased power request.

The method proceeds to step S107 and the control unit 201 checks whether the current power provided by the fuel cell 232 corresponds with the determined power request to be provided by the fuel cell 232. If the current power provided by the fuel cell 232 deviates from the power request to be provided by the fuel cell 232, the control unit 201 optionally adjusts the target water quantity. For example, the control unit 201 may increase the target water quantity for producing more condensed water 248 that may be used to generate more hydrogen gas 224 for providing additional electric power if the current power provided by the fuel cell 232 is below the power request to be provided by the fuel cell 232. Analogously, the control unit 201 may decrease the target water quantity for producing less condensed water 248 if the current power provided by the fuel cell 232 is higher than the power request to be provided by the fuel cell 232. Accordingly, the control unit 201 may adjust the target water quantity so that the production of condensed water 248 correlates with the power request to be provided by the fuel cell 232.

The method proceeds to step S108 and the control unit 201 determines a target state of charge of the accumulator 238. The target state of charge may be defined by a single value or by a range, for example 70% to 90% of the capacity of the accumulator 238.

The method proceeds to step S109 and the control unit 201 checks whether the state of charge of the accumulator 238 (determined at step S104) corresponds with the target state of charge of the accumulator 238. If the state of charge of the accumulator 238 deviates from the target state of charge of the accumulator 238, the control unit 201 optionally adjusts the target water quantity. For example, the control unit 201 may increase the target water quantity for producing more condensed water 248 that may be used to generate more hydrogen gas 224 for providing additional electric power to charge the accumulator 238 if the state of charge of the accumulator 238 is lower than the target state of charge of the accumulator 238. Analogously, the control unit 201 may decrease the target water quantity for producing less condensed water 248 if the state of charge of the accumulator 238 is higher than the target state of charge of the accumulator 238. Accordingly, the control unit 201 may adjust the target water quantity so that the production of condensed water 248 correlates with the target state of charge of the accumulator 238.

The method proceeds to step S110 and the control unit 201 checks whether the water quantity signal (determined at step S101) corresponds with the (optionally adjusted) target water quantity. If the water quantity signal deviates from the target water quantity, the control unit 201 controls the heat exchanger 240 to adjust the preparation of condensed water 248 for reaching the target water quantity.

The water quantity signal may deviate from the target water quantity if the water quantity signal is higher or lower than the target fill level of the water tank 108, the target amount of water 204 in the water tank 108, the target filling rate and/or the target consumption rate of water in the water tank 108. The water quantity signal may be lower than the target water quantity if the heat exchanger 240 prepares less condensed water 248 than required to fulfill the target water quantity whereas the water quantity signal may be higher than the target water quantity if the heat exchanger 240 prepares more condensed water than required. Then, the method proceeds to step S111 or S112 to control the heat exchanger 240 to increase or reduce the preparation of condensed water 248 accordingly so that the water quantity signal complies with the target water quantity. The control unit 201 may control the heat exchanger 240 in terms of a closed-loop control.

At step S111, the control unit 201 controls the heat exchanger 240 to adjust the preparation of condensed water 248. For example, the control unit 201 may switch on the heat exchanger 240 if less condensed water 248 has been prepared than required to fulfill the target fill level (e. g. fill level or filling rate of water tank 108 is too low) or switch off the heat exchanger 240 if more condensed water 248 has been prepared than required to fulfill the target fill level (e. g. fill level or filling rate of water tank 108 is too high). Moreover, the control unit 201 may adjust the cooling temperature of the heat exchanger 240 if the water quantity signal deviates from the target water quantity. As explained above, the control unit 201 may reduce the cooling temperature of the heat exchanger 240 to change the aggregate state of the water contained in the exhaust gases 226, 244 from vapor to a mixture of liquid and to reduce the vapor fraction for increasing the amount of condensed water 248 prepared by the heat exchanger 240. So, the amount of condensed water prepared by the heat exchanger may be controlled by a variation of a reduction (more or less) of the cooling temperature (see FIG. 3). The control unit 201 may reduce the cooling temperature of the heat exchanger 240 for example by increasing a fan speed or reducing the temperature of a coolant. Moreover, the control unit may control a flow rate of the coolant. Hence, the control unit 201 controls the cooling temperature of the heat exchanger 240 to adjust the amount of condensed water 248 condensed from the reformer exhaust gas 226 and/or the cathode exhaust gas 244 to comply with the target water quantity, e. g. to provide enough water 204 for the reformer 218 to produce a required amount of hydrogen gas 224 for the fuel cell 232 to provide electric power as demanded by the agricultural machine 102.

The control unit 201 may optionally receive the parameter of the reformer exhaust gas 226 from the reformer exhaust gas sensor 258 and the parameter of the cathode exhaust gas 244 from the cathode exhaust gas sensor 260 such as the pressures, the relative humidity and/or the volume flow/mass flow of the exhaust gases 226 and 244, for example. The control unit 201 may estimate the temperature of the exhaust gases 226 and 244 based on the relative humidity and the volume flow/mass flow of the exhaust gases 226 and 244. The mass flow of the exhaust gases may also estimated based on the amount of water provided to the fuel cell 232. Optionally, the control unit 201 may receive the temperature of the exhaust gases 226 and 244 as corresponding parameter from the reformer exhaust gas sensor 258 and the cathode exhaust gas sensor 260. The control unit 201 may also determine the cooling temperature of the heat exchanger 240, for example by means of a temperature sensor integrated in the heat exchanger 240. Based on the pressure of the exhaust gases 226, 244, the temperature of the exhaust gases 226, 244 and the cooling temperature of the heat exchanger 240, the control unit 201 determines a production rate of condensed water 248 provided by the heat exchanger 240. For example, the control unit 201 may estimate how much condensed water could be produced within a specific time period when a specific amount of exhaust gases 226, 244 are cooled by the heat exchanger 240. The production rate of the condensed water 248 may be determined in liters of water per time. In addition, the control unit 201 may optionally adjust the production rate of condensed water 248 in accordance with the target water quantity, e. g. a target filling rate of water of the water tank 108 or a consumption rate of water out of the water tank 108. For example, the production rate of condensed water 248 may be adjusted by the control unit 201 to correspond with the consumption rate of water 204 consumed by the reformer 218. The production rate of condensed water depends on the pressure of the exhaust gas and the temperature difference of the exhaust gas after cooling. Hence, the control unit 201 may adjust the production rate of condensed water 248 by adjusting the cooling temperature of the heat exchanger 240. When the cooling temperature of the heat exchanger 240 is lowered, the production rate of condensed water 248 will be increased, and vice versa. Then, the method proceeds to step S112 or S113.

The amount of condensed water 248 or the production rate of condensed water 248 may also depend on the amount of exhaust gases transferred to the heat exchanger 240. Accordingly, the control unit 201 may individually control the amounts of the cathode exhaust gas 244 and reformer exhaust gas 226 transferred to the heat exchanger 240 at optional step S112. As mentioned above, the amount of the reformer exhaust gas 226 is adjustable by the first valve 270 and the amount of the cathode exhaust gas 244 is adjustable by the second valve 272. Both, the first and second valves 270 and 272 can be controlled by the control unit 201 separately between a fully open and a fully closed position. The position of each valve 270, 272 may depend on a parameter of the corresponding exhaust gas 226, 244. For example, the position of the valves 270 and 272 may depend on a temperature and/or a vapor fraction of the corresponding exhaust gas 226, 244 so that a greater amount of exhaust gas 226, 244 having the lower temperature and/or vapor fraction out of the reformer exhaust gas 226 and the reformer exhaust gas 226 is transferred to the heat exchanger 240. Accordingly, efficiency of the heat exchanger 240 can be increased since a lower cooling temperature may be necessary to condense water from the exhaust gas having the lower temperature and/or vapor fraction. Further, the more exhaust gases 226, 240 are transferred, the more condensed water 248 can be prepared by the heat exchanger 240 (and vice versa). Hence, the control unit 201 controls individually the amounts of the cathode exhaust gas 244 and reformer exhaust gas 226 to adjust the amount of condensed water 248 condensed from the reformer exhaust gas 226 and/or the cathode exhaust gas 244 to comply with the target water quantity.

Moreover, the control unit 201 may estimate the composition of the mixed exhaust gases 226 and 244 in the heat exchanger 240 based on the parameters (e. g. humidity, temperature, mass flow) determined by the gas sensors 258 and 260. Considering the composition of the mixed exhaust gases 226 and 244, the external conditions (e. g. cooling capacity available) and the need for water generation, the control unit may optionally optimize the control based on desired metrics. E. g. the control unit 201 may prefer that best efficiency for cooling is weighted or that there is always enough water in the water tank 108. Then, the method proceeds to step S113.

At step S113, the control unit 201 controls the water pump 266 for providing water 204 from the water tank 108 in accordance with the parameter of the variable quantity of water 204 required by the reformer 218. For example, the control unit 201 adjusts the pump rate of the water pump 266 to comply with the consumption rate of the reformer 218. Hence, the control unit 201 can control the change of the amount of water 204 in the water tank 108 by controlling the production rate of condensed water 248 for filling the water tank 108 and by controlling the consumption rate of the water 204 for feeding the reformer 218. The fill level of the water tank 108 will increase if the production rate of condensed water 248 is greater than the consumption rate of water 204 (and vice versa). Accordingly, the control unit 201 can control the fill level of the water tank 108 to correspond with the target fill level of the water tank 108.

Then, the method proceeds to step S114 and ends. The method may be restarted again with step S100.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 102 | agricultural machine | 212 | evaporator |
| 104 | fuel cell system | 214 | reformer gas |
| 106 | fuel tank | 216 | fuel-water mixture |
| 108 | water tank | 218 | reformer |
| 110 | cabin | 220 | reformer catalyst |
| 112 | front wheel | 222 | reformer burner |
| 114 | rear wheel | 224 | hydrogen gas |
| 116 | hood | 226 | reformer exhaust gas |
| 118 | exhaust pipe | 228 | gas heating system |
| 120 | environment | 230 | cathode gas |
| 201 | control unit | 232 | fuel cell |
| 202 | fuel | 234 | anode |
| 204 | water | 236 | cathode |
| 206 | air | 238 | accumulator |
| 208 | compressor | 240 | heat exchanger |
| 210 | mixing point | 242 | anode exhaust gas |
| 244 | cathode exhaust gas | 406 | memory |
| 246 | electric energy | | |
| 248 | condensed water | | |
| 250 | bypass | | |
| 252 | bypass | | |
| 254 | exhaust gas | | |
| 256 | exhaust gas | | |
| 258 | reformer exhaust gas sensor | | |
| 260 | cathode exhaust gas sensor | | |
| 262 | heat exchanger exhaust gas sensor | | |
| 264 | fluid sensor | | |
| 266 | water pump | | |
| 268 | fuel pump | | |
| 270 | valve | | |
| 272 | valve | | |
| 302 | saturation line | | |
| 304 | saturation line | | |
| 306 | saturation line | | |
| 308 | initial exhaust conditions | | |
| 310 | final exhaust conditions | | |
| 312 | critical point | | |
| 402 | I/O interface | | |
| 404 | controller | | |

## Claims

1. A fuel cell system (104), comprising:
a fuel cell (232);
a heat exchanger (240) configured to condense water from exhaust gas of the fuel cell system (104) for preparing condensed water (248);
a water tank (108) connected with the heat exchanger (240);
a fluid sensor (264) for providing a water quantity signal representing at least one parameter of a variable quantity of water; and
a control unit (201); wherein
the control unit (201) is configured to
receive the water quantity signal from the fluid sensor (264);
determine a target water quantity; and
control the heat exchanger (240) to adjust the preparation of condensed water (248) for reaching the target water quantity if the water quantity signal deviates from the target water quantity.

2. The fuel cell system (104) of claim 1, wherein
the target water quantity comprises at least one of a target fill level of the water tank (108), a target amount of water in the water tank (108), a target filling rate, a target production rate of water and/or a target consumption rate of the water.

3. The fuel cell system (104) of claim 2, wherein
the target fill level of the water tank (108) corresponds to a value between 70% and 90% of a maximum filling quantity of the water tank (108).

4. The fuel cell system (104) of any one of claims 1 to 3, wherein the control unit (201) is configured to adjust a cooling temperature of the heat exchanger (240) if the water quantity signal deviates from the target water quantity.

5. The fuel cell system (104) of any one of the preceding claims, wherein
the fuel cell (232) comprises a cathode (236) connected with the heat exchanger (240) for transferring cathode exhaust gas (244) provided by the cathode (236) as exhaust gas.

6. The fuel cell system (104) of any one of the preceding claims, comprising
a reformer (218) connected with the heat exchanger (240) for transferring reformer exhaust gas (226) provided by the reformer (218) as exhaust gas.

7. The fuel cell system (104) of claim 6, wherein the control unit (201) is configured to
determine a parameter of a variable quantity of water required by the reformer (218); and
determine the target water quantity based on the parameter of the variable quantity of water required by the reformer (218).

8. The fuel cell system (104) of claim 7, comprising
a water pump (266); wherein
the control unit (201) is configured to control the water pump (266) for providing water in accordance with the parameter of the variable quantity of water required by the reformer (218).

9. The fuel cell system (104) of any one of claims 6 to 8, when referring back to claim 5, wherein
the control unit (201) is configured to control amounts of the cathode exhaust gas (244) and reformer exhaust gas (226) transferrable to the heat exchanger (240).

10. The fuel cell system (104) of any one of the preceding claims, wherein the control unit (201) is configured to
determine a power request to be provided by the fuel cell (232);
determine a current power provided by the fuel cell (232); and
adjust the target water quantity if the current power is below the power request.

11. The fuel cell system (104) of any one of the preceding claims, comprising an accumulator (238); wherein the control unit (201) is configured to
determine a state of charge of the accumulator (238);
determine a target state of charge; and
adjust the target water quantity if the state of charge of the accumulator (238) is below the target state of charge.

12. The fuel cell system (104) of any one of the preceding claims, comprising
an exhaust gas sensor (258, 260) for determining a parameter of the exhaust gas; wherein
the parameter of the exhaust gas comprises at least one of a temperature, a pressure, a relative humidity, a volume flow and/or a mass flow of the exhaust gas.

13. The fuel cell system (104) of claim 12, wherein the exhaust gas sensor is a cathode exhaust gas sensor (260) for determining a parameter of the cathode exhaust gas (244) or a reformer exhaust gas sensor (258) for determining a parameter of the reformer exhaust gas (226).

14. The fuel cell system (104) of claim 12 or 13, wherein the control unit (201) is configured to
determine a cooling temperature of the heat exchanger (240);
determine a production rate of condensed water (248) providable by the heat exchanger (240) based on the parameter of the exhaust gas and the cooling temperature.

15. The fuel cell system (104) of claim 14, wherein the control unit (201) is configured to
adjust the production rate of condensed water (248) by adjusting the cooling temperature.

16. The fuel cell system (104) of claim 15, wherein the control unit (201) is configured to
adjust the production rate of the condensed water (248) in accordance with the target water quantity.

17. A method of controlling a fuel cell system (104), the method comprising:
receiving a water quantity signal representing at least one parameter of a variable quantity of water from a fluid sensor (264);
determining a target water quantity; and
controlling a heat exchanger (240) to adjust a preparation of condensed water (248) for reaching the target water quantity if the water quantity signal deviates from the target water quantity.
